# EUROPEAN PATENT SPECIFICATION

(11) **EP 0 345 814 B1**
(45) Date of publication and mention of the grant of the patent: **29.09.1993**
(21) Application number: 89110503.3
(22) Date of filing: 09.06.1989
(51) Int. Cl.: F02D 41/04, F02D 41/28

(54) **Electric control apparatus for automobile and method of compensating for time delay of measured data**
Elektrisches Steuergerät für Kraftfahrzeug und Kompensationsverfahren der Zeitverzögerung von Messdaten
Appareil de commande électrique pour automobile et méthode de compensation du retard de mesure des données

(30) Priority: 10.06.1988 JP 144524/88
(43) Date of publication of application: 13.12.1989
(73) Proprietor: HITACHI, LTD., Chiyoda-ku, Tokyo 100 (JP)
(72) Inventor: Sekozawa, Teruji, Asao-ku Kawasaki-shi (JP); Funabashi, Motohisa, Sagamihara-shi (JP)
(74) Representative: Strehl Schübel-Hopf Groening & Partner

(56) References cited:
- EP-A- 142 101
- EP-A- 223 426
- GB-A- 2 042 772
- JP-A-63 131 840
- PATENT ABSTRACTS OF JAPAN, vol. 8 (M-317)[177], 15th August 1984; & JP-A-59 68 543 (NIPPON DENSO) 18-04-1984
- PATENT ABSTRACTS OF JAPAN, vol. 11 (M-584)[111], 24th April 1987; & JP-A-61 272470 (HONDA MOTOR) 02-12-1986
- PATENT ABSTRACTS OF JAPAN, vol. 8, (M-329)[216], 3rd October 1984; & JP-A-59 101 556 (NISSAN) 12-06-1984
- PATENT ABSTRACTS OF JAPAN, vol. 9 (M-403)[194], 10th August 1985; & JP-A-60 60234 (HONDA) 06-04-1985
- PATENT ABSTRACTS OF JAPAN, vol. 9 (M-379)[111], 15th May 1985; & JP-A-59 231 150 (NIPPON DENSO) 25-12-1984
- EAEC-paper 87013 (STRASSBURG, 3-5/06/1987)

## Description

### BACKGROUND OF THE INVENTION

The present invention relates to an electric control apparatus for controlling an engine and/or suspension of an automobile on the basis of processed data, and more particularly to an apparatus for and method of compensating for a time delay of measured data as described in the preamble of claim 1 or 12, respectively. Such an apparatus and method is known from the EAEC paper 87013, Straßburg 3-5/6/87.

In a conventional electric control apparatus for an engine and/or suspension of a vehicle such as an automobile, data measured with various sensors are picked up at an interval of a constant time or constant rotary angle (i.e., rotary angle of the crank shaft), and the picked up data are averaged, e.g., by means of weighted averaging, within a predetermined section (e.g., within a predetermined time duration or predetermined rotary angle range), and subjected to removal of noises by means of a primary delay filter or the like, to smoothing of pulsation of suction air to the engine, and to other processing. The electric control apparatus of this type is disclosed in, e.g., Japanese Patent Laid-open Publication JP-A-58-8239.

The engine conditions of an automobile change from time to time while measuring engine running data. Therefore, it becomes necessary to control fuel injection, ignition advance angle and the like in order to deal with such a change, especially a rapid change of the engine conditions. However, the control operation will be delayed due to a time delay at a filter used for noise removal, a time delay at a sensor while converting a physical value into an electric value, a time delay required for processing data at the electric control apparatus of an automobile.

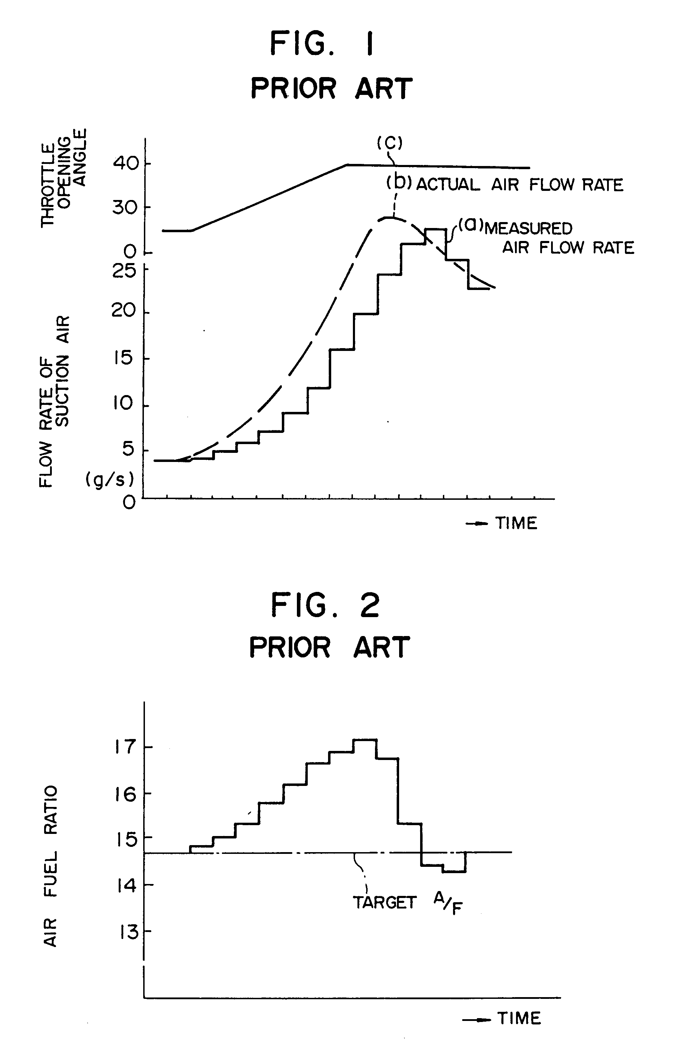

Such a delay in the control operation will be described with reference to Figs. 1 and 2. Fig. 1 is a graph showing a relationship between a throttle opening angle (degree) of a throttle valve and a flow rate Q of suction air to the engine, and Fig. 2 is a graph showing the control characteristic of an air/fuel ratio of a mixture gas in the engine when rapidly opening the throttle valve under control of a conventional control apparatus.

Fig. 1 shows a characteristic curve (a) of measured data obtained when rapidly opening a throttle valve as shown by a curve (c), wherein the flow rate of suction air to the engine is measured with an air flow sensor such as a hot-wire type air flow meter, and the measured data are passed through a filter such as an RC circuit in the manner as will be described later and thereafter A/D converted. A curve (b) represents an actual flow rate of suction air to the engine. It is to be noted that the measured data have a delay from the actual flow rate because of a delay in the air flow meter, RC circuit and the like. Therefore, if a fuel corresponding in amount to an air flow rate measured at the time of rapid opening of the throttle valve is injected aiming at a target air/fuel ratio, e.g., of 14.7, the resultant air/fuel ratio takes a value shifted from the target value 14.7 as shown in Fig. 2 because of a delay of the measured air flow rate. Therefore, there arises the phenomenon that the air flow rate becomes lean at the start of acceleration (at the time of increasing the air flow rate), whereas it becomes rich during a short period at the end of acceleration.

As described above, there arises the problem that a correct control cannot be ensured during a rapid engine condition change if actuators (e.g., for fuel injection valve and the like) are controlled in accordance with manipulatory values calculated based on the averaged or smoothed, measured data.

As disclosed in Japanese Patent Laid-open Publications JP-A-63-131840 and JP-A-63-131841, in an engine control apparatus which calculates a fuel injection time on the basis of an output from a pressure sensor for measuring the pressure in an intake tube, the pulsation component of a pressure output signal from the pressure sensor is removed with a filter having a relatively large time constant. In order to compensate for a delay of the fuel injection control caused by a delay of the measured pressure data, a reference fuel injection time duration at a current time point is adjusted based on a difference between the reference fuel injection time duration at the current time point and the reference fuel injection time duration calculated at the time before one period, and based on other parameters. A fuel injection time duration is calculated based on the data supplied from a plurality of sensors such as pressure sensor data, engine revolution number data and the like. However, this control apparatus operates to compensate for a time delay not of the respective measured data, but of the final manipulatory value. Therefore, the control apparatus cannot satisfactorily follow a rapid change in output data from respective sensors so that the delays in measured data cannot be correctly compensated. For example, in the case where only the pressure in the intake valve changes and the engine rotation number does not change, it is not possible to compensate for the measured pressure data only. Consequently, a correct engine control is not possible leading to a hardship of proper engine output control and exhaustion gas control.

Further, there is not known a conventional electric control apparatus for a suspension which can compensate for a delay of measured data from a damper stroke sensor or the like, resulting in a hardship of correctly controlling a suspension upon a rapid change of road conditions.

In the above mentioned EAEC paper 87013; Straßburg 3-5/6/87, a smooth-running control is described which registers irregularities of the engine rotation electronically and adjusts the fuel metering accordingly. For this, a rough running index is defined from a series of time intervals of the same cylinder, and the smooth-running control adjusts the fuel metering in the direction of lean or rich operation so that a prescribed value of the rough running index is always maintained.

The GB-A-2 042 772 discloses an apparatus for damping low-frequency oscillations of an engine in which the oscillations are determined by differentiating speed signals obtained at different instants of time.

In the EP-A-142 101, a method of controlling an engine is described in which a number of patterns are stored in advance as engine operating conditions, and normally, the engine is controlled by a simple engine control procedure. The engine control procedure is adjusted by comparing a specific engine operating condition with an operation pattern stored in advance.

The EP-A-223 426 is related to a control in which an idling engine speed is maintained constant by adjusting the amount of air by operating a solenoid valve, to effect (PID-) feedback to a deviation from a constant target value.

### SUMMARY OF THE INVENTION

It is an object of the present invention to provide, a method of and apparatus for compensating for a time delay of data measured with various sensors, in an electric control apparatus for an engine and/or suspension of a vehicle such as an automobile.

The above object is achieved by the features given in apparatus main claim 1 and in method main claim 12.

The present invention proposes compensation for a delay time, i.e., a time required for processing data after the time when a sensor measured the data. Specifically, as will be described in connection with the embodiments, it is obtained an estimation value for a correct sensor output value at a current time point (or at a current rotary angle position) through calculation of measured data at past time points and the current point. That is, the estimation value at the current time point (or at the current rotary angle position) is derived from the measured value at the current time point (or at the current rotary angle position) and and the time points before one and two periods. The term "period" means a constant time duration or constant rotary angle range, at an interval of which data are picked up. In other words, in the present invention, a time delay of measured data is compensated by calculating an estimation value of data to be measured at the time point after one or two periods based on the data measured at the current and past time points, and regarding the calculated estimation value as an actual measured data at the current time point.

According to a preferred embodiment of calculating an estimation value at a current time point (or at a current rotary angular position), a difference between the measured data values at the current time point (or at the current rotary angular position) and at the time before one period is multiplied by a coefficient derived by using a function of another measured data value such as an engine revolution number, and the resultant data value is added to the measured data value at the current time point (at the current rotary angular position).

An estimation value thus obtained is substantially equal to the correct sensor output value at the current time point (rotary angular position). An engine and/or suspension is controlled based on the estimation value so that a correct control with good response to a rapid change in engine running conditions and/or road conditions is ensured to thereby improve the engine output characteristic, exhaustion gas characteristic and the like.

The measured data may preferably be treated only at a transition state of the engine or suspension. Similarly, the measured data may be treated only when a change in measured data value increases at a rate larger than or equal to a predetermined rate. With such arrangements, a more correct estimation value can be obtained for all various conditions on an engine, suspension, and vehicle conditions.

### BRIEF DESCRIPTION OF THE DRAWINGS

Fig. 1 is a graph showing a relationship between a throttle valve opening angle and a measured air flow rate according to a prior art;
Fig. 2 is a graph showing an air/fuel control characteristic associated with Fig. 1;
Fig. 3 is a schematic diagram showing the main part of an internal combustion engine of an automobile to which the present invention is applied;
Fig. 4 shows the structure of a control unit included in the diagram of Fig. 3;
Fig. 5 shows an example of an RC filter;
Fig. 6 is a graph showing a response characteristic of an RC filter;
Fig. 7 is a graph showing a relationship between a throttle opening angle and an estimation value of air flow rate data, according to a first embodiment of this invention;
Fig. 8 shows an air/fuel control characteristic associated with Fig. 7;
Fig. 9A is a flow chart for illustrating the operation of the first embodiment;
Fig. 9B is a diagram for explaining the data shift operation of the first embodiment;
Figs. 10 and 11 show the delay compensation circuit arrangements according to the first embodiment;
Fig. 12 is a graph showing the characteristic of an estimation value of air flow rate data, according to a second embodiment of this invention;
Fig. 13 shows a delay compensation circuit arrangement according to the second embodiment;
Fig. 14 is a block diagram showing a third embodiment;
Fig. 15 is a block diagram showing a modification of the third embodiment;
Fig. 16 shows a circuit arrangement according to a fourth embodiment of this invention;
Fig. 17 is a diagram showing the characteristic of measured data of a stepwise changing air flow rate;
Figs. 18A to 18D show the examples of maps used in a fifth embodiment of this invention;
Fig. 19 shows a circuit arrangement of the fifth embodiment;
Fig. 20 shows a circuit arrangement according to a sixth embodiment of this invention;
Fig. 21 is a flow chart used for explaining the operation of the sixth embodiment; and
Fig. 22 shows a circuit arrangement of a modification of the sixth embodiment.

### DESCRIPTION OF THE PREFERRED EMBODIMENTS

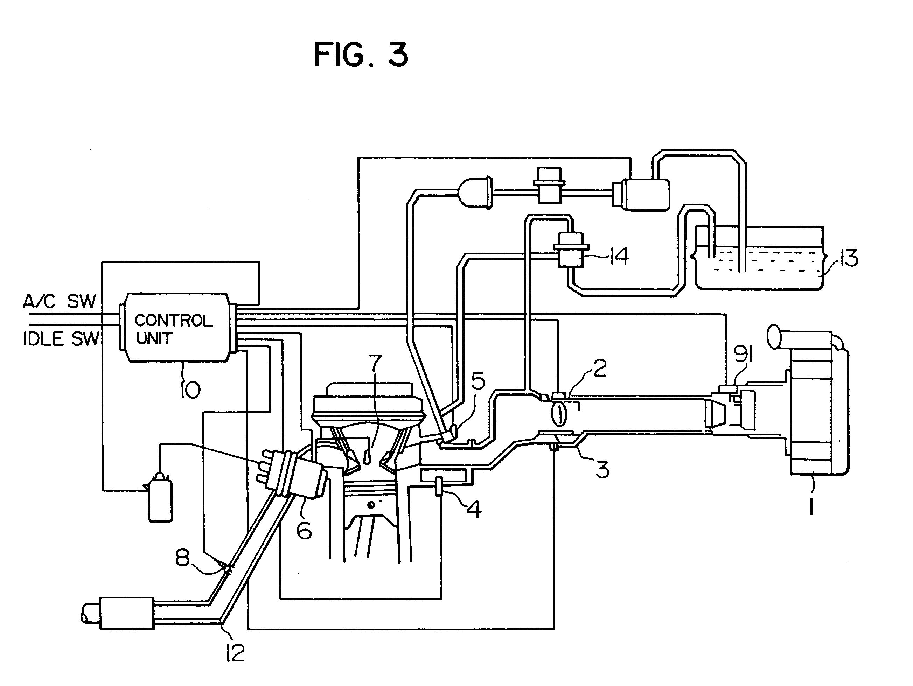

The embodiments of the present invention will be described with reference to the accompanying drawings. Fig. 3 shows a fuel injection system and the like of an internal combustion engine of an automobile to which the present invention is applied.

In Figs. 3, air enters from an air cleaner 1, passes through an air flow meter such as a hot-wire type air flow meter (also called an air flow sensor) 91, a throttle valve 2, and a bypass air valve 3, and reaches an injector 5. At the injector 5, fuel sent from a fuel tank 13 via a fuel pump 14 is injected and mixed with air to be sucked into a combustion chamber. In the combustion chamber, the mixture gas is ignited with an ignition plug and burned. The burning gas passes through an exhaustion tube 12 and the air/fuel ratio thereof is measured with an air/fuel ratio sensor 8.

Inputted to a control unit 10 is a signal representative of a suction air flow rate from the air flow meter 91, a signal representative of an air/fuel ratio from the air/fuel ratio sensor 8, a signal representative of the temperature of cooling water from a cooling water temperature sensor 4, a pulse signal outputted from a distributor crank angle sensor 6 every time a crank shaft (not shown) rotates by a predetermined angle, and other signals.

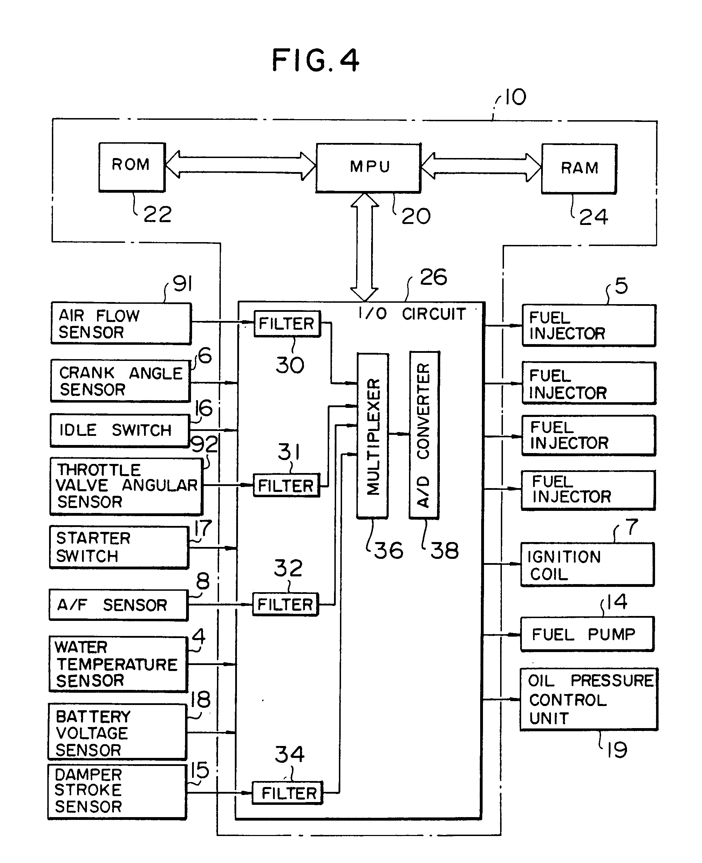

The structure of the control unit 10 is shown in Fig. 4. Devices to be controlled by the control unit 10 include an engine, suspension and the like. Outputs from various sensors mounted on an automobile can be used therefore as the measured data which are subjected to delay compensation of this invention. In addition to the outputs from the above-described sensors, the control unit 10 may be inputted, as shown in Fig. 4, with an output signal from a throttle angle sensor 92 for measuring an angular position ϑth of the throttle valve, and with an output from a dumper stroke sensor 15 for measuring the dumper stroke position of a wheel on the suspension. These outputs from the sensors 4, 6, 8, 15, 91 and 92 represent the data indicative of the conditions of the controllable devices. In addition, inputted to the control unit 10 are output signals from an idle switch 16 and starter switch 17, and an output signal from a battery voltage sensor 18. The control unit 10 includes an input/output circuit (simply called an I/O circuit hereinafter) 26 for receiving the outputs from the sensors, a microprocessor unit (called an MPU hereinafter) 20, a read-only memory (called ROM hereinafter 22, and a random access memory (called RAM hereinafter) 24. In the I/O circuit, the analog outputs from, e.g., the air flow sensor 91, air/fuel ratio sensor 8, dumper stroke sensor 15, throttle angle sensor 92 and etc. are sent to a multiplexer 36 via corresponding primary delay filters 30, 32, 34 and 31 made of, e.g., an RC filter for removing signal noises. The multiplexer sequentially selects and sends the inputted signals to an A/D converter 38 at a predetermined period (e.g., predetermined time duration or predetermined rotary angle range). The A/D converted digital data are stored in RAM 24 and processed at MPU 20.

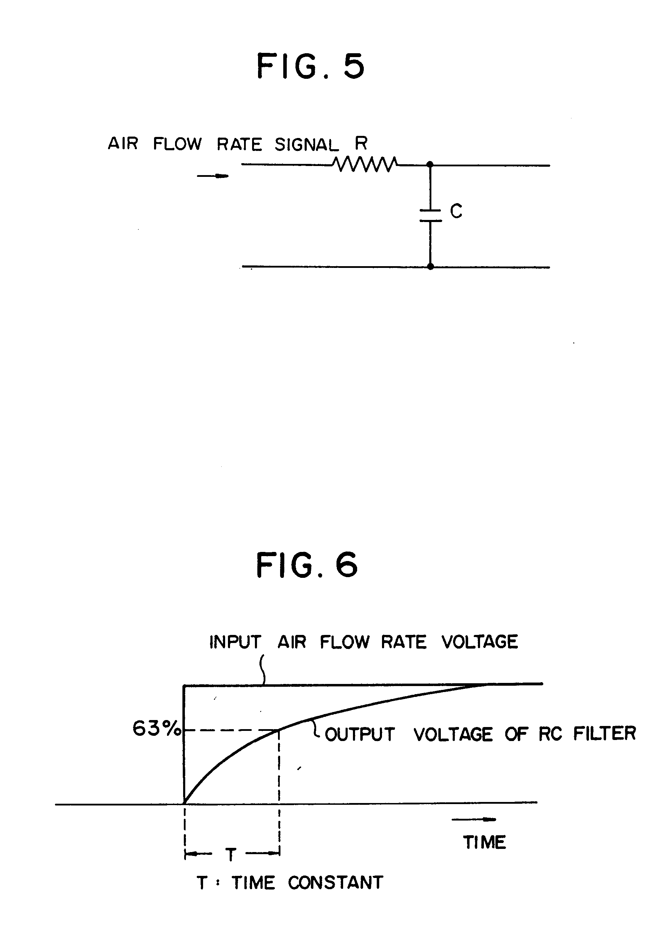

An example of the RC filter circuit is shown in Fig. 5, and the step response characteristic thereof is shown in Fig. 6.

Fig. 6 shows an output voltage from the RC filter circuit when a stepwise voltage (a signal representative of an air flow rate) from the air flow sensor 91 is inputted to the RC filter circuit.

A pulse signal from the crank angle sensor 6 passes through the I/O circuit and is counted, e.g., with a soft counter in RAM 24 to thereby calculate a revolution number of the engine per unit time. The revolution number is stored at a predetermined period in RAM at a predetermined area. Other input signals are processed in a similar manner.

Respective data stored in RAM are subjected to predefined operations such as calculation for a fuel injection pulse width, ignition timing, dumper stroke position and the like, in accordance with program instructions stored in ROM. The operation results are outputted as commands to the I/O circuit which in turn outputs control signals to the actuators so that the actuators control the controllable devices such as the fuel injection valve 5, ignition coil 7, oil pressure control device 19 for controlling the dumper stroke position, and the like.

The main reason of deteriorating the air/fuel ratio control characteristic of the control apparatus as shown in Fig. 2 is a time delay from the time when a sensor measured a data value to the time when MPU 20 processes the data. This time delay is caused by a delay at the sensor itself, a delay at a primary delay filter, a delay at the A/D converter, and the like. For instance, a delay about 10 to 30 msec is present at an air flow sensor, several tens msec at an RC filter, and a delay about 4 msec at the A/D converter.

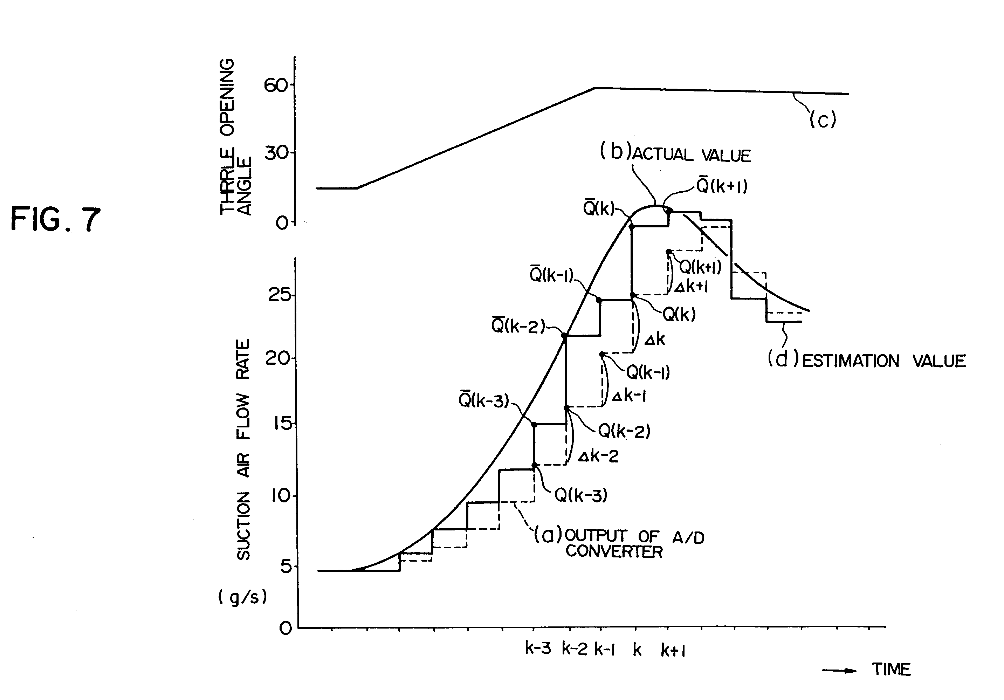

The first embodiment of this invention compensating for such a delay will be described with reference to Figs. 7 to 11.

In this embodiment, an actual measured data value at a current time point is estimated on the assumption that a difference between the measured data value at the current time point and the actual data value measured with a sensor is substantially equal to the change amount of the measured data from the past to the present time. The estimation value is used for compensating for the time delay of the measured data. Specifically, the estimation value for measured data at the time after one period is obtained on the assumption that the change amount of measured data from the past to the present time will continue up to the time after one period, and the estimation value is regarded as the actual measured data value at a current time point to thereby compensate for the time delay.

Fig. 7 shows the relationship between an actual (correct) air flow rate (curve (b)) when the throttle valve 2 is rapidly opened as shown by curve (c), an output data of the A/D converter 38 (curve (a)), and an estimation value of an air flow rate (curve (d)). In Fig. 7, a current time is represented by k, and the measured data (which mean data before processed by MPU, e.g., output data from the A/D converter 38) are represented by Qk, and an estimation value for the actual (correct) air flow rate at the current time point k is represented by Q̅k. The method of obtaining Q̅k will be described hereinbelow. The data from the air flow sensor are assumed to be outputted from the A/D converter at a predetermined period (e.g., at a predetermined time duration). The measured data of an air flow rate at a time point k is represented by Q(k), the data at a time point (k-1) by Q(k-1), the data at a time point (k-2) by Q(k-2), and so on. A change of measured data is defined as follows.

${\text{Δ}}_{\text{k}} \text{= Q(k) - Q(k-1) (1)}$

${\text{Δ}}_{\text{k-1}} \text{= Q(k-1) - Q(k-2) (2)}$

${\text{Δ}}_{\text{k-2}} \text{= Q(k-2) - Q(k-3) (3)}$

A difference between the estimation value Q̅k and the measured data Q(k) at a current time point is represented by:

${\overline{\text{Δ}}}_{\text{k}} \text{=} \overline{\text{Q}} \text{(k) - Q(k) (4)}$

In this embodiment, the estimation value $\overline{\text{Q}}$k is obtained in accordance with the following criterion:

${\text{Δ}}_{\text{k}} {\text{= Δ}}_{\text{k}} {\text{+ (Δ}}_{\text{k}} {\text{- Δ}}_{\text{k-1}} \text{) (5)}$

This formula assumes that a difference between the measured data value at a current time point and the correct value actually measured with the air flow sensor at the current time point is equal to the sum of the change amount Δk between the current time point and the time before one period and the change rate (Δₖ - Δₖ₋₁). Specifically, the change rate (Δₖ - Δₖ₋₁) of the change amount of measured data is assumed to continue up to the time after one period, and the change amount of measured data at the time after one period from the current time point is assumed as the sum of Δk and (Δₖ - Δₖ₋₁), to thereby estimate the measured data at the time after one period and regard the estimation value as the actual measured data value at the current time point.

The formula for obtaining the estimation value Qk is given as follows by developing the formula (5):

$\overline{\text{Q}} \text{(k) = 3Q(k) - 3Q(k-1) + Q(k-2) (6)}$

It is also expressed as:

$\overline{\text{Q}} {\text{(k) = Q(k) + Δk + (Δ}}_{\text{k}} {\text{- Δ}}_{\text{k-1}} \text{) (7)}$

The estimation value $\overline{\text{Q}}$k thus obtained takes a value approximately equal to the actual air flow rate (curve (b)), as shown by curve (d) in Fig. 7. Consequently, by using the estimated air flow rate Q̅k instead of the measured data Q(k) at the current time point for calculating the fuel injection amount and the like, the above-described time delay can be compensated.

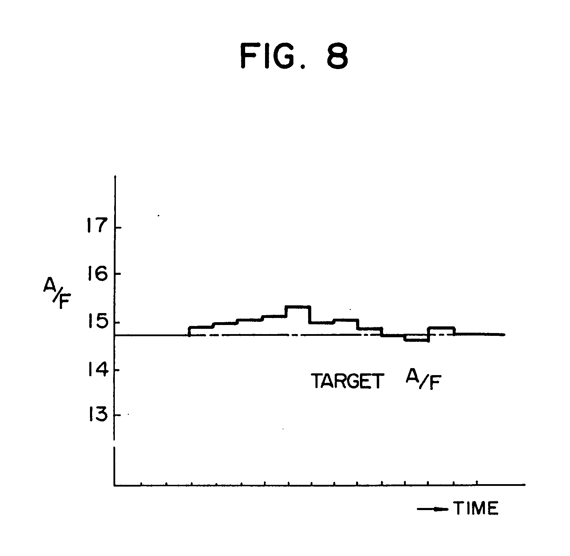

Fig. 8 shows the air/fuel ratio control characteristic in which fuel is injected so as to obtain a target air/fuel ratio on the basis of the air flow rate estimated as in the above embodiment. It can be seen that the air/fuel ratio control characteristic is considerably improved when compared with that shown in Fig. 2.

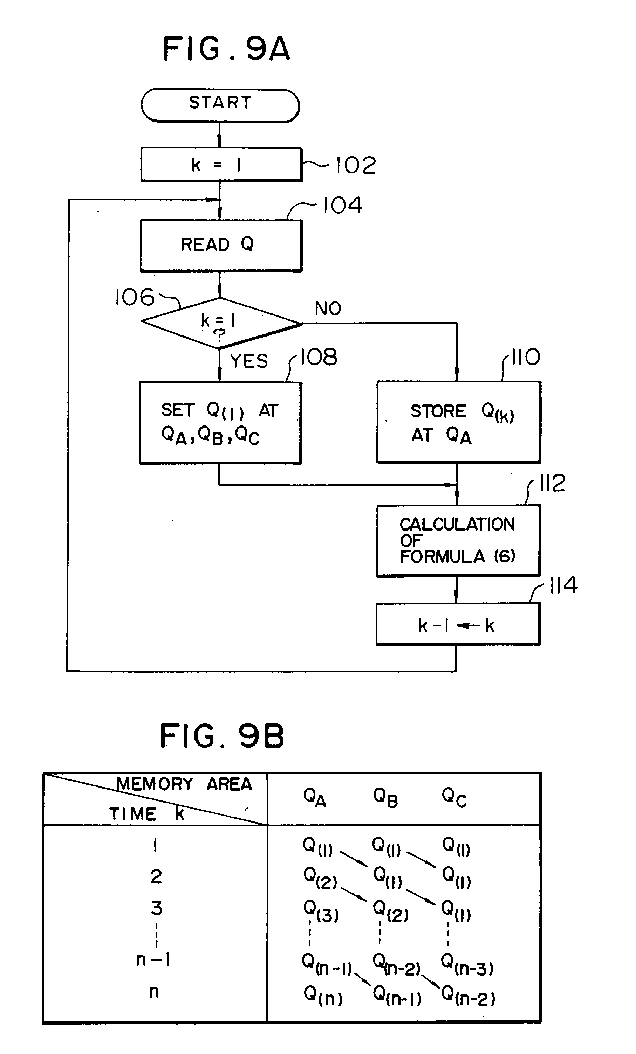

Fig. 9A shows an example of a flow chart illustrating the calculation of the estimation value in accordance with programs stored in ROM shown in Fig. 4. In this embodiment, it is assumed that the data from the air flow sensor are A/D converted at an interval of a predetermined time, e.g., every 10 msec.

First, upon turning on the power of the electric control apparatus by means of the starter switch 17, each sensor, control unit 10 and the like are actuated.

At step 102, time k is set as k = 1. At step 104, the measured data Q(1) of an air flow rate from the A/D converter 38 are read every 10 msec. At step 106, since k = 1, the flow advances to step 108 whereat the read-out data Q(1) are initially set in RAM at a predetermined area. At the initial setting, the data Q(1) are set at predetermined areas Qa, Qb and Qc as shown in Fig. 9B.

Next, at step 112, calcutation of the formula (6) is carried out using the data at the areas Qa, Qb and Qc to thereby obtain Q(1) which is set in RAM at a different area. Next, at step 114, after a lapse of 10 msec, the value of k is set as k + 1, and at step 104 the measured data Q(2) are read. Since k = 2, the flow advances to step 110 whereat the data Q(2) are stored at area Qa, and the data Q(1) at areas Qa and Qb are shifted to areas Qb and Qc. Upon calculation of the formula (6), the data at areas Qa, Qb and Qc become in correspondence with Q(k), Q(k-1) and Q(k-2), respectively.

The similar operations are repeated to calculate the data Q(k).

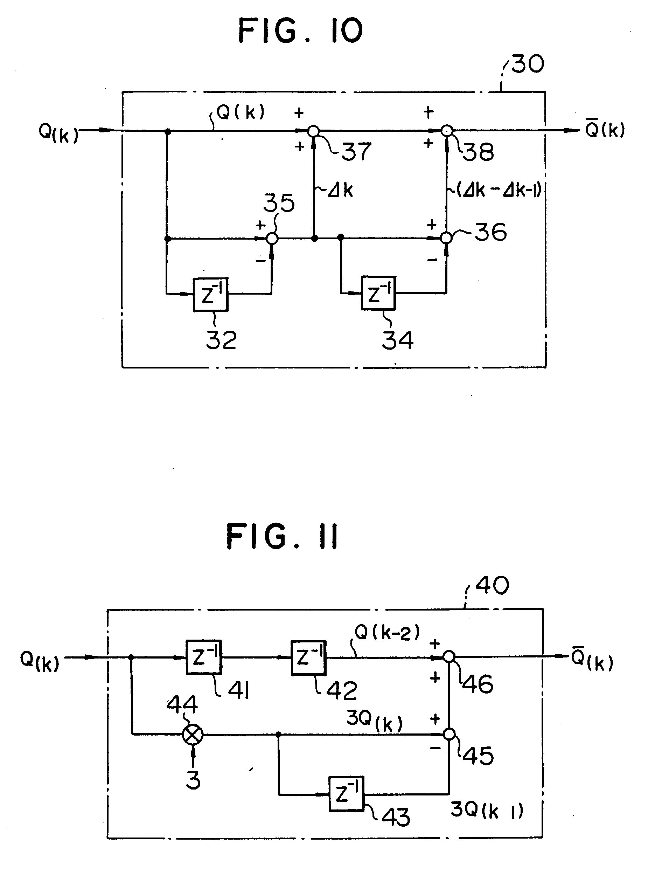

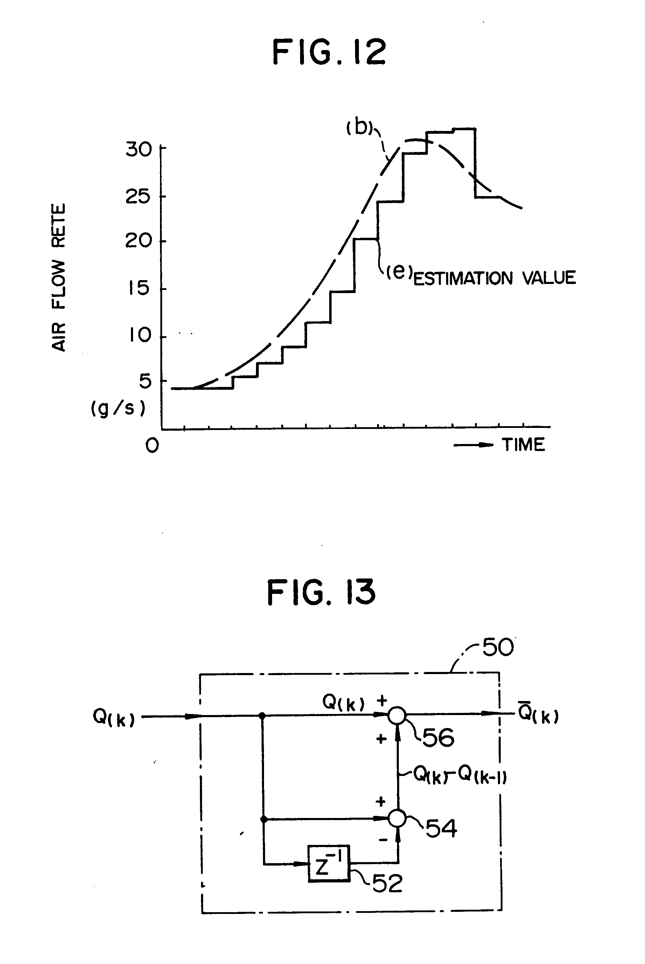

Figs. 10 and 11 show the circuit arrangement of this embodiment which may be implemented within the I/O circuit 26.

Fig. 10 shows a delay compensation circuit (advance filter) 30 embodying the formula (7). In Fig. 10, reference numerals 32 and 34 represent a delay element for delaying a signal for a time equal to one period, reference numerals 35 and 36 represent a subtractor, and reference numerals 37 and 38 represent an adder. The circuit 30 is inputted with the measured data Q(k) of an air flow rate which is outputted from the A/D converter at a predetermined period, and outputs an estimation value Q̅(k).

Fig. 11 shows a delay compensation circuit (advance filter) 40 embodying the formula (6). In Fig. 11, reference numerals 41, 42 and 43 represent a delay element, reference numeral 44 represents a multiplier for multiplying an input signal by 3, and reference numerals 45 and 46 represent an adder.

In the above embodiment, the estimation value Q̅(k) is calculated in accordance with the formula (7). However, it is generally obtained by the following formula (8): 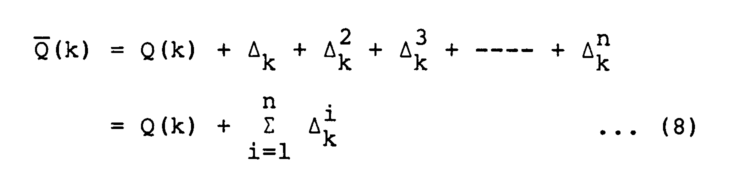
where 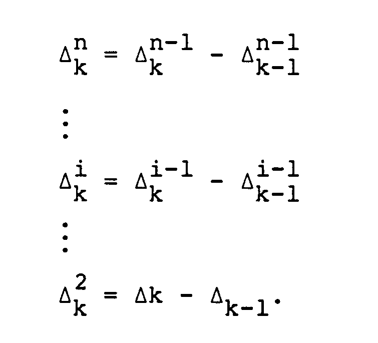
A more correct estimation value Q̅(k) can be obtained from the embodiment constituted in accordance with the above formula.

The second embodiment of this invention will be described next. In the first embodiment, the estimation value Q̅(k) is obtained by using the formula (6) or (7) based upon the criterion of formula (5). In the second embodiment, the following criterion is used:

$\overline{\text{Q}} {\text{(k) = Q(k) + Δ}}_{\text{k}} \text{(9)}$

The meaning of this formula is as follows. It is assumed that a change Δₖ between the measured values at a current time point and at the time before one period will continue up to the (future) time after one period to thus estimate the measured value at the time after one period, and the estimated value is regarded as the actual measured data value at the current time point. The formula (9) is changed into the following formula by using the above-defined formula (1):

$\overline{\text{Q}} \text{(k) = 2Q(k) - Q(k-1) (10)}$

Fig. 12 shows the comparison between the estimation data obtained through the formulas (9) and (10) and the actual suction air flow rate, under the same condition as of Figs. 1 and 7.

In Fig. 12, a curve (b) represents an actual air flow rate, and a curve (e) represents estimation data in this embodiment. The curve (e) shown in Fig. 12 has an air flow rate nearer to the actual air flow rate than the curve (a) shown in Fig. 1. When compared with the curve (e) shown in Fig. 7, the curve (e) shown in Fig. 12 takes somewhat a poor precision of the estimation value at the time duration exceeding the peak of an actual air flow rate. However, since the calculation for obtaining the estimation value is simpler than that of the first embodiment, the load of MPU can be alleviated.

In this embodiment, the data processing is carried out in accordance with programs in ROM in the similar manner to the first embodiment. The data processing of the formula (10) is realized by the circuit shown in Fig. 13 wherein reference numeral 52 represents a delay element, 54 a subtracter, and 56 an adder.

If an estimation value is obtained by using the formula (6), (7) or (10) for the case where the waveform of air flow rate data to be measured has an overshoot as shown by the curves (b) in Figs. 7 and 12, the estimation value has a good precision at the rising portion of data (at the portion where the increasing rate of data is large), but a poor precision at the portion where the increasing rate of data is smaller than a predetermined value.

In consideration of the above, it is also possible that the method as described with the first and second embodiments is used for the portion where the increasing rate of measured data is larger than or equal to the predetermined value, whereas the measured data per se are used for the portion where the increasing rate of measured data is decreasing or smaller than the predetermined value.

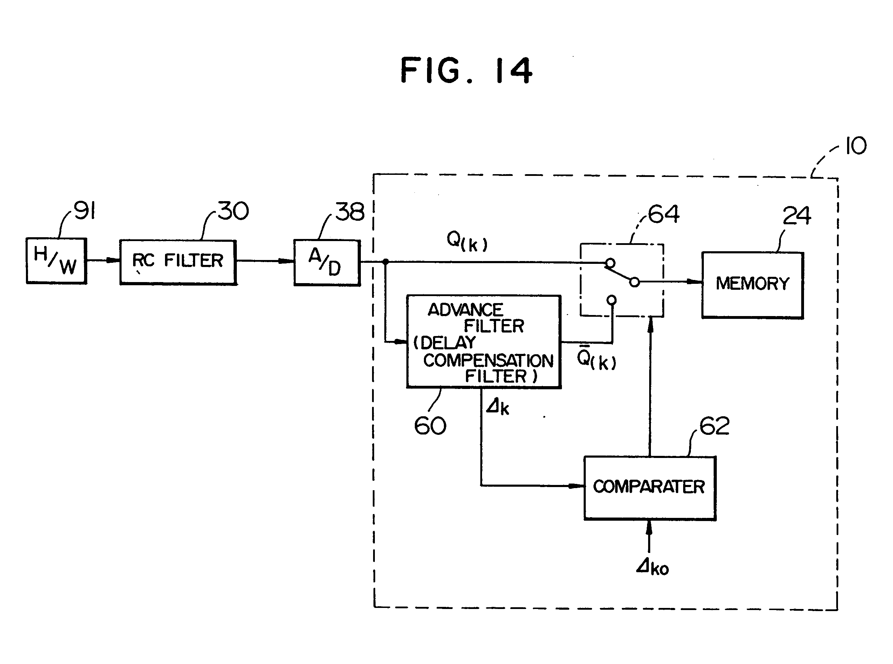

The third embodiment based on the above concept is constructed as shown in Fig. 14.

In this embodiment, there is provided a switch 64 which selects either the estimation value $\overline{\text{Q}}$(k) outputted from the delay compensation circuit of the first or second embodiment, i.e., the advance filter 60, or the measured data Q(k) of an air flow rate from the A/D converter 38. The data selected by the switch 64 are stored in a memory, e.g, RAM.

A comparator 62 compares the change amount Δₖ obtained by the advance filter 60 with a predetermined value Δk₀. The comparator 62 controls the switch 64 such that the data Q(k) are selected when Δₖ ≧ Δk₀, and the data Q(k) when Δₖ < Δk₀.

The comparator 62 and switch 64 may be constructed of hardware within the unit 10, or may be constructed of software.

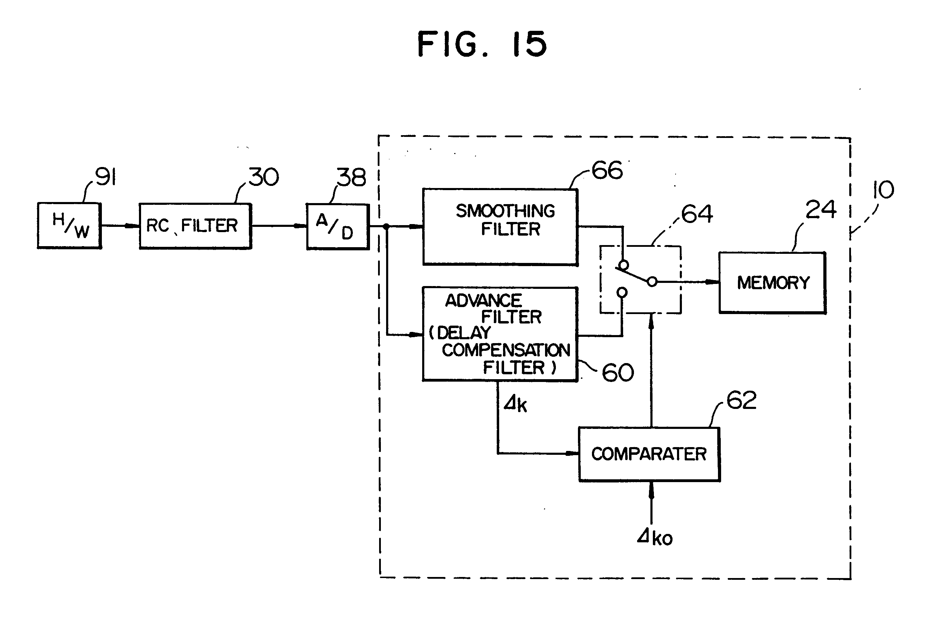

Fig. 15 shows a modification of this embodiment, wherein an output data from the A/D converter is supplied to the advance filter on one hand, and supplied on the other hand to a smoothing filter 66 for cutting a low frequency pulsation by means of weighted averaging or the like. One of the outputs is selected by a switch 64.

In the embodiments shown in Figs. 14 and 15, the advance filter is used only for the measured data associated with a large increasing rate of an air flow rate so that the data supplied to RAM can indicate a more correct and actual air flow rate.

Next, the fourth embodiment will be described. In the first and second embodiments, an estimation value at a current time point is obtained on the assumption that the change of measured data will continue similarly up to the time after one period, and the estimation value is used as the actual current value. However, the fourth embodiment is effective when used for the case where the device to be compensated has already its delay characteristic data.

Compensating for a time delay of a device, e.g., the RC circuit will be described. In the step response of the RC circuit shown in Fig. 6, the time constant can be measured as the time required for the output voltage to become 63% of the final value, or may be calculated from the values of resistors and capacitors of the RC circuit.

One period at which the measured data are inputted is assumed as Δt. The measured data of an air flow rate are processed by the following formula to thereby compensate for the time delay of the RC circuit:

$\overline{\text{Q}} {\text{(k) = Q(k) + K}}_{\text{T}} \text{(Q(k) - Q(k-1)) (11)}$

where $\overline{\text{Q}}$(k) is an estimation value of an air flow rate at time point k. The coefficient Kt in the formula (11) is obtained by the following formula:

${\text{K}}_{\text{T}} \text{=} \frac{\text{T}}{\text{Δt}} \text{(12)}$

In this embodiment, a hardware circuit may be constructed so as to satisfy the formula (11), or the data processing may be carried out with software.

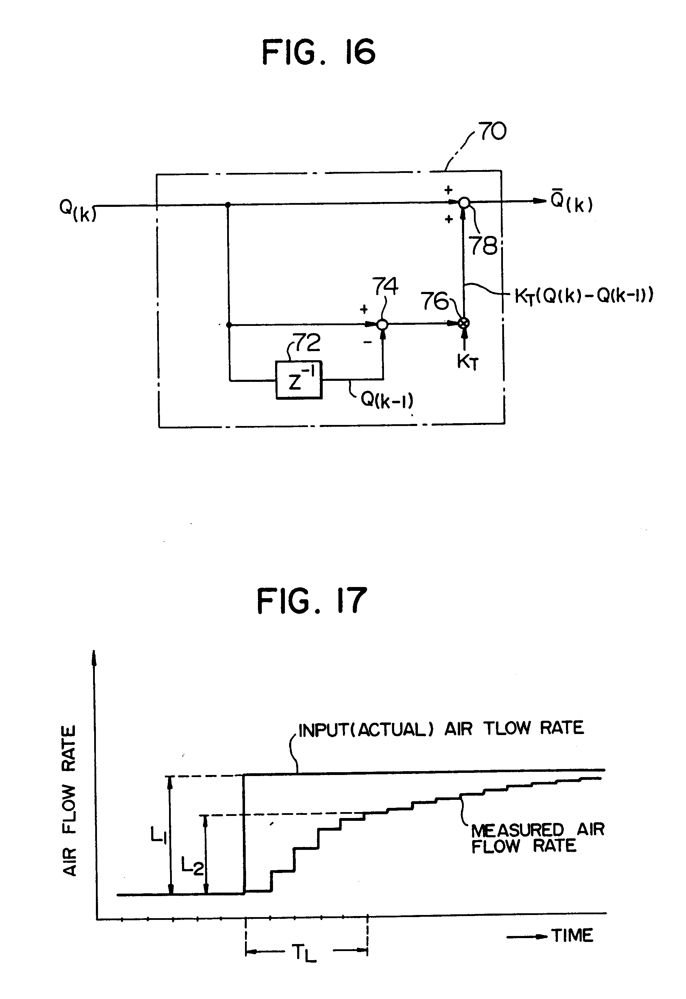

Fig. 16 shows a circuit arrangement of the fourth embodiment. In Fig. 16, reference numeral 72 represents a delay element, 74 a subtractor, 76 a multiplier for multiplying the data by a multiplier Kt, and 78 an adder.

If the embodiment is realized with software, the coefficient Kt is calculated beforehand and stored in a memory (RAM or ROM) to then carry out the operation of the formula (11).

Although this embodiment compensates for a delay of the RC circuit only, the delay is large as compared with that of the sensor and AD converter so that the estimation value takes a value near the actual air flow rate.

The device whose delay is compensated is the RC circuit in the above embodiment. However, another method is also possible as shown in Fig. 17 wherein a stepwise air flow is applied experimentally to obtain the response data of the air flow rate. In this case, during the course of obtaining the measured data from an stepwise changed input air flow, not only the delay at the RC circuit, but also the delay of the hot-wire type air flow meter and A/D converter are added, resulting in the step response as shown in Fig. 17.

The time when the measured air flow rate becomes 63% of the final value of the input stepwise air flow rate is represented by T1. Namely, the time constant T1 is L2/L1 in Fig. 17. By using the coefficient Kt which is represented by: 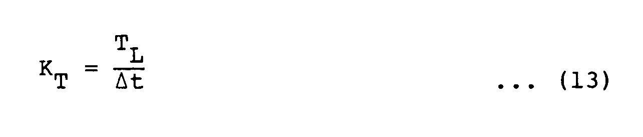
the delay compensation according to the formula (11) is carried out. Regarded as the primary delay system are the devices to be delay compensated, i.e., a circuit including for example the air flow sensor and RC circuits and also preferably A/D converter. The time constant T1 of the circuit is experimentally obtained beforehand, and the coefficient is obtained by dividing it by the one period Δt as in the formula (13) which coefficient is used in obtaining the estimation value from the formula (11) to thereby realize delay compensation.

A delay compensation can be conducted as in the following fifth embodiment which is one example of applications of the fourth embodiment:

$\overline{\text{y}} {\text{(k) = y(k) + f(N,Q, T}}_{\text{w}} \text{,ϑth,Δt) × (y(k) - y(k-1)) (14)}$

where y represents an optional measured data value, N an engine revolution number, Q a suction air flow rate, Tw a cooling water temperature, ϑth a throttle valve opening angle, and Δt one period time. In other words, the formula (14) uses as the coefficient Kt in the formula (11) the function f( ) of the data representative of the engine running conditions and suspension conditions.

y(k) represents the measured data value at a current time point, and y(k-1) represents the measured data value at the time before one period.

Using the suction air flow rate Q as an example of the measured data y, the function f( ) is expressed for example by the following formula: 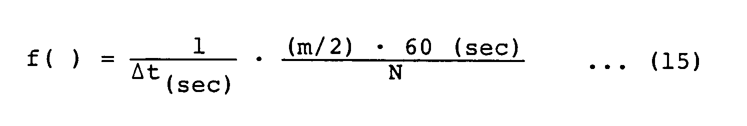
where m represents the number of engine cylinders.

Therefore, the estimation value is expressed as: 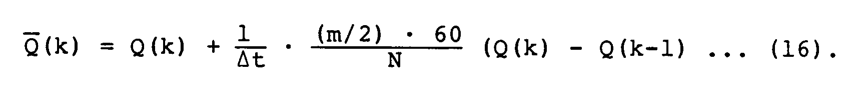
In obtaining the estimation value by the formula (16), the change amount Δk becomes smaller as the value N becomes larger. This means that the change rate of the suction air flow rate Q becomes larger as the vehicle runs at a lower speed.

The function f( ) may use :

${\text{f( ) = K}}_{\text{N}} {\text{, K}}_{\text{Q}} {\text{, K}}_{\text{TW}} {\text{, K}}_{\text{ϑth}} \text{/Δt (17)}$

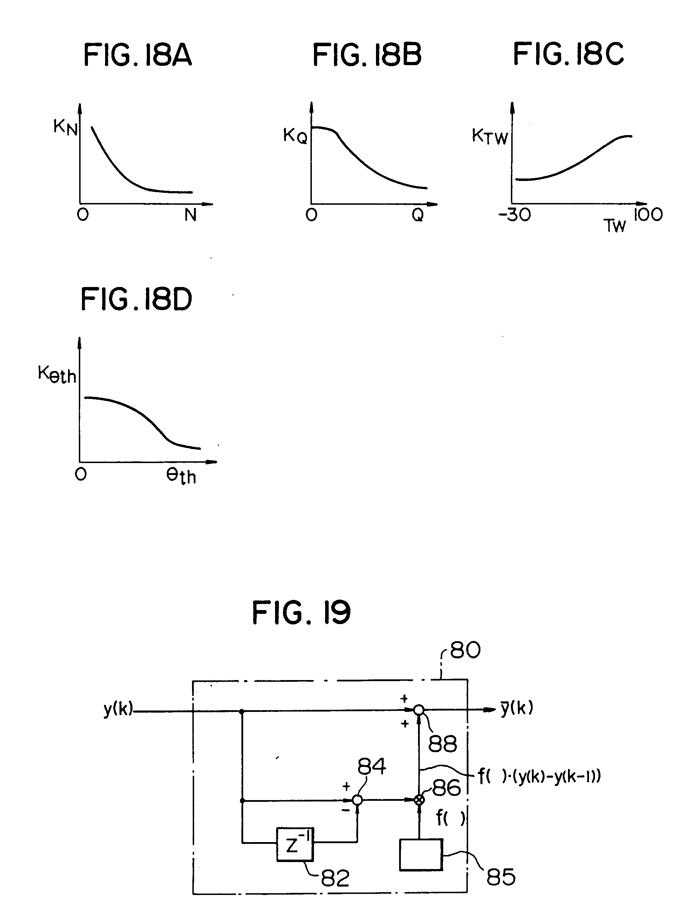

where coefficients Kn, Kq, Ktw and K_{ϑth} are respectively for the values N, Q, TW and ϑth, which may be obtained from the maps shown in Figs. 18A to 18D which are stored beforehand in ROM or RAM.

Fig. 19 shows the circuit arrangement of the fifth embodiment, wherein reference numeral 85 represents a circuit for calculating the function f( ), 82 a delay element, 84 a subtractor, 86 a multiplier, and 88 an adder.

If the fifth embodiment is used with the first embodiment, the formula (5) or (6) is changed as in the following:

$\overline{\text{y}} {\text{(k) = y(k) + K}}_{\text{T1}} \text{(y(k) - y(k-1))}$
${\text{+ K}}_{\text{T3}} {\text{[K}}_{\text{T1}} \text{(y(k) - y(k-1))}$
${\text{+ K}}_{\text{T2}} \text{(y(k-1) - y(k-2))] (18)}$

where Kt1, Kt2, and Kt3 can be obtained from the function of data (parameters) representative of the engine and/or suspension conditions.

The third embodiment is applicable to the fourth and fifth embodiments such that delay compensation is effected only for the rising portion of measured data to be delay compensated.

Next, the sixth embodiment will be described. As described previously, noises are present in a signal measured with a hot-wire type air flow meter because of various reasons. An RC circuit is used to remove such noises. In some cases, the signal is A/D converted and passed through a delay filter (e.g., smoothing filter) to smooth the pulsation of the measured data of an air flow rate.

If a device to be controlled, an engine in this case, is under an ordinary running (steady operation) condition, the measured data do not change very rapidly but a pulsation component is likely to occur. If a smoothing filter is used for removing such low frequency components, the output data from the smoothing filter indicate substantially the actual air flow rate even if the delay of the measured data is not compensated, thus posing no problem.

However, under a transient running condition, the air/fuel control characteristic relative to fuel injection control is degraded because of the delay at the smoothing filter. Also, under a transient running condition during acceleration for example, the measured data value changes greatly so that the pulsation component can be neglected relatively. Accordingly, in some cases the measured data are not required to be passed through the smoothing filter.

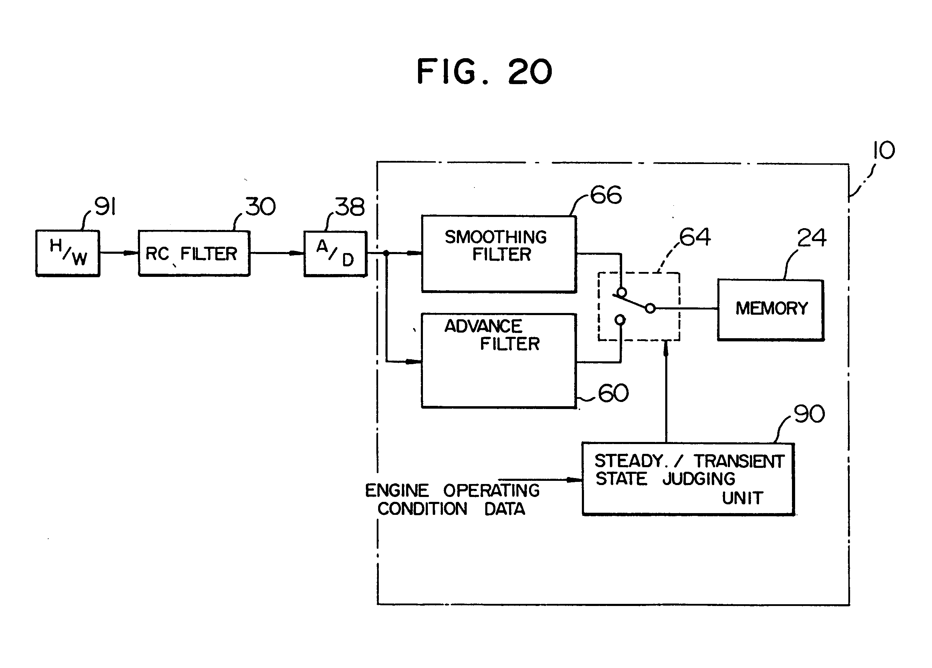

In consideration of the above, in this embodiment, the measured data are passed through the smoothing filter under an ordinary running condition, and passed through the advance filter shown in the above embodiments instead of the smoothing filter under a transient running condition during acceleration for example. A particular example for conducting such control is shown in Fig. 20. Constitutional elements shown in Fig. 20 with identical reference numbers to those in Fig. 14 have the similar function to that described with Fig. 14. In Fig. 20, filters 60 and 66, switch 64 and discriminator unit 90 may be constructed of hardware and implemented within the I/O circuit.

The steady/transient condition discriminator unit 90 is inputted with data representative of the engine running condition to perform the condition discrimination. For instance, it discriminates the transient running condition if the change rate of a throttle valve opening angle is larger than or equal to a certain level, and controls the switch 64 to select one of the filters 60 and 66 in the manner as described previously.

With such an arrangement, the pulsation component of the measured data can be smoothed under a steady running condition, and the delay thereof can be compensated under a transient running condition. Processing the air flow rate data obtained as above advantageously improve the air/fuel ratio control characteristic. The advance filter 60 may use any one of those shown in the first, second, fourth and fifth embodiments.

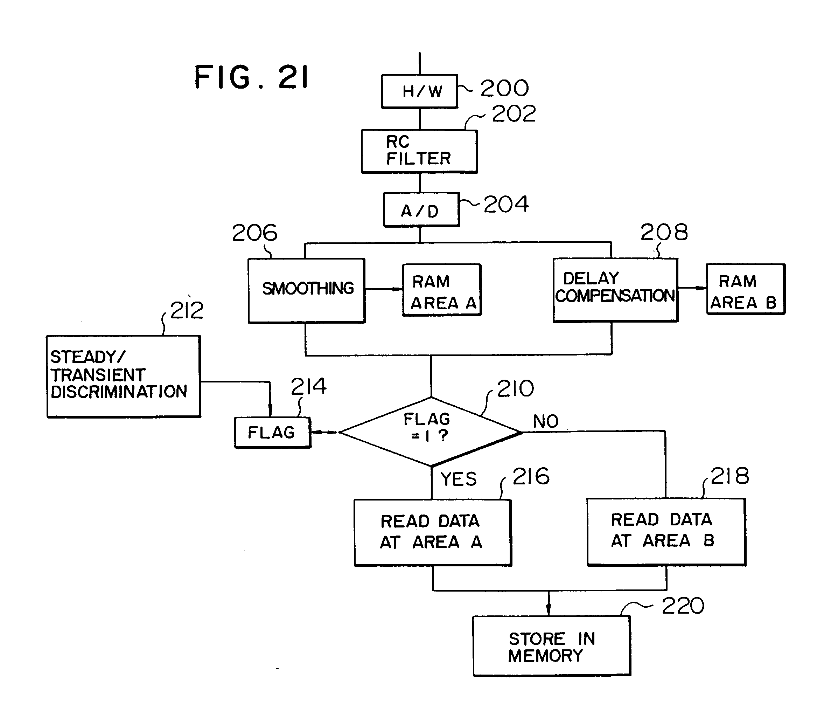

Fig. 21 shows an example of a procedure flow diagram for this embodiment wherein the operation of the filters 60 and 66, switch 64 and discriminator unit 90 is controlled in accordance with programs in ROM.

In Fig. 21, at blocks 200, 202 and 204, an air flow rate is measured with an air flow sensor, noises are removed at an RC filter, and the resultant signal is A/D converted. The A/D converted data are subjected to smoothing such as weighted averaging at block 206, the resultant data being stored in RAM at area A. At block 208, the A/D converted data are subjected to delay compensation in the manner as described with the foregoing embodiments and stored in RAM at area B.

At block 212, the engine running condition is discriminated whether it is a transient condition or a steady condition. Upon discrimination, a flag "0" for the transient condition or a flag "1" for the steady condition is set in RAM at a predetermined area (block 214).

At block 210, the flag is checked. In the case of a flag "1", data in RAM at area A are read (block 216) and set at block 220 in RAM at a predetermined area for data processing. In the case of a flag "0", data at area B are read (block 218) and set in RAM at a predetermined area.

In the above embodiment, the discriminator unit discriminates if the engine running condition is a steady condition or a transient condition. However, if the measured data are for the dumper stroke position signal, the discriminator unit discriminates if the suspension condition is a steady condition or a transient condition to accordingly control the switch 64. Namely, the transient condition is discriminated if the dumper stroke position changes greatly, to then select the advance filter.

In the above embodiments, the method of processing mainly an air flow rate data has been described. However, the invention is applicable to all data inputted to a microcomputer mounted on an automobile. For instance, various data to be processed are the input data to an electric control apparatus for control of an engine, which include a throttle angle signal, accelerator angle signal, air/fuel ratio signal, suction tube pressure signal, cooling water temperature signal, suction air temperature signal, revolution number signal, knocking signal and the like.

The data to be processed include also an output data from a dumper stroke sensor supplied for control of the oil pressure control apparatus 19 which regulates the oil pressure of a suspension, and other data.

Further, in the above embodiments, a predetermined time duration is used as one period for the case where an air flow rate is used as the measured data. However, a predetermined time duration or predetermined rotary angle range may be used as one period for the case where other types of measured data are used.

As described so far in detail, according to the present invention, in an electric control apparatus for an engine, suspension or the like mounted on a vehicle, the measured data are subjected to an advance filter to compensate for a time delay of the measured data. Accordingly it becomes possible to provide a simple method and apparatus for compensating for a time delay of measured data, thereby effectively improving the control performance.

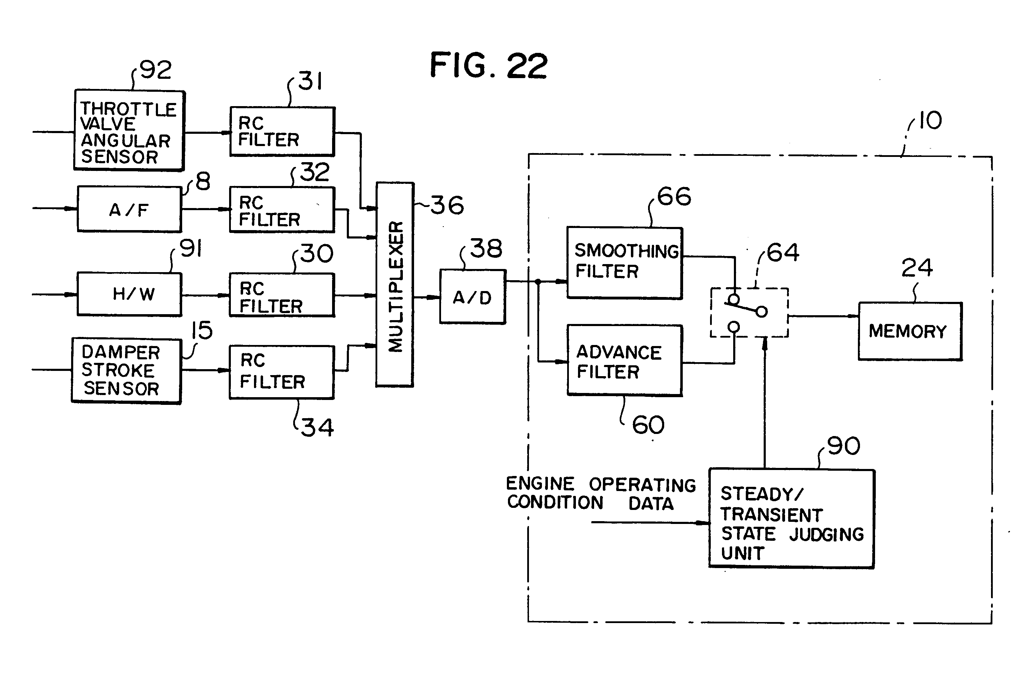

Further, in the above embodiments, a delay compensation for one type of measured data has been described. However, as shown in Fig. 4, a delay compensation processing may be simultaneously carried out for other output data from the throttle valve angle sensor 92, air/fuel ratio sensor 8, dumper stroke position sensor 15 or the like. In such a case, in the third and sixth embodiments, the outputs from the sensors are sequentially selected by the multiplexer 36, A/D converted and thereafter, passed through one of the filters 60 and 66. Fig. 22 shows an example of a modification of the sixth embodiment, as constructed in accordance with the above arrangement.

## Claims

1. An electric control apparatus for electrically controlling a controllable device (5, 7, 14, 19) mounted on an automobile, comprising:
measuring means (8, 15, 91, 92, 30-34, 38) for measuring data values (Q(k)) representing at least one state of the automobile;
memory means (24) for storing successive output data values received periodically from said measuring means;
calculation means (20, 60) for calculating at a current time point an estimation value ($\overline{\text{Q}}$(k)) representing said one state of said automobile at a future time point on the basis of an output data value of said measuring means at a current time point and output data values previously stored in said memory means; and
operation processing means (20) for calculating at least one control value to be applied to said controllable device on the basis of the estimation value from said calculation means;
wherein said calculating means (20) includes means (30, 40, 50) for reading out output data values (Q(k-1), Q(k-2)) stored in said memory means one and two points in time before and for calculating the estimation value (Q̅(k) on the basis of the read-out output data values and the output data value (Q(k)) stored at the current time point, and means (30, 40) for calculating a first difference value between the output data value (Q(k) stored at the current time point and the output data value (Q(k-1)) stored one point in time before, a second difference between the output data values (Q(k-1), Q(k-2)) stored one and two points in time before and a third difference value between the first and second difference values, the apparatus being **characterized** in that said calculating means includes further means (30, 40) for calculating the sum of the output data value stored at the current time point and a difference value between the first and third difference values to thereby obtain the estimation value representing said state at one point in time after.

2. An apparatus according to claim 1, wherein
said memory means (24) includes further means for storing a coefficient proportional to the time constant of a step response of said measuring means; and wherein
said calculation means includes means (70) for reading out the coefficient and for multiplying said first difference value by the coefficient.

3. An apparatus according to claim 2, wherein said coefficient (K_{T}) is the time constant divided by a time equal to one period.

4. An apparatus according to claim 2, wherein said measuring means includes at least one sensor (8, 15, 91, 92) for measuring data values representing at least one state of the automobile and a primary delay filter (30-34) for filtering an output signal from the sensor to output the output data values, and wherein said time constant is a time constant (T_{L}) for a step response of the primary delay filter.

5. An apparatus according to claim 2, wherein said measuring means includes at least one sensor (8, 15, 91, 92) for measuring data values representing at least one state of the automobile and a primary delay filter (30-34) for filtering an output signal from the sensor to output the output data values, and wherein said time constant is a time constant (T) for a step response of the sensor and the primary delay filter.

6. An apparatus according to claim 1, further comprising:
detecting means (4, 6, 8, 15-18, 91, 92) for detecting data values representing at least another state of the automobile; and
function generating means (85) for generating at least one function representing the state of the automobile on the basis of the detected data values of the detecting means; wherein
said calculation means (20) includes means (80) for multiplying said first difference value by the function.

7. An apparatus according to claim 6, wherein said function generating means (85) includes means for generating first and second functions representing the state of the automobile on the basis of the detected data values of the detecting means; and wherein
said calculation means (20) includes means (80) for obtaining the product of said second difference and the second function.

8. An apparatus according to claim 6, wherein the at least another state of the automobile is a running condition of the automobil engine.

9. An apparatus according to claim 1, comprising further
filter means (66) for filtering output data values from said measuring means (8, 15, 91, 92, 30-34, 38);
judging means (62, 90) for judging whether the state of said automobile is in either one of a first state and a second state; and
selecting means (64) for selecting one of outputs of said means and said filter means in accordance with the result of said judging means;
wherein said operation processing means (20) includes means for calculating the control value on the basis of the selected output of said selecting means.

10. An apparatus according to claim 9, wherein said judging means includes means (90) for judging as first and second states whether the state of said automobile is a transient state or a steady state, and said selecting means includes means (64) for selecting an output of said calculation means when said judging means judges the state as a transient state, and selecting an output of said filter means when said judging means judges the state as a steady state.

11. An apparatus according to claim 9, wherein said judging means includes means (62) for judging as the first state when the output data value of said measuring means is increasing at a ratio equal to or larger than a predetermined ratio, and as the second state when the output data value is increasing at a ratio smaller than the predetermined ratio, and said selecting means (64) includes means for selecting the outputs of said calculation means and said filter means, respectively when said judging means judges the first and second states.

12. A method of compensating a time delay of measured data in an electric control unit for an automobile which has measuring means (8, 15, 91, 92, 30-34, 38) for measuring data values (Q(k)) representing at least one state of the automobile, memory means (24) for storing successive output data values received periodically from said measuring means and operation processing means (20) for calculating at least one control value to be applied to a controllable device on the basis of output data values of said measuring means, comprising:
a first step of reading out output data values previously stored in said memory means;
a second step of calculating at a current time point an estimation value (Q̅(k)) representing said one state of said automobile at a future time point on the basis of an output data value of said measuring means at a current time point and the output data values read out from said memory means; and
a third step of calculating in said operation processing means the manipulating value on the basis of the estimation value;
wherein said second step includes reading out output data values (Q(k-1), Q(k-2)) stored in said memory means one and two points in time before and calculating the estimation value on the basis of the read-out output data values and the output data value stored at the current time point by calculating a first difference value between the output data value (Q(k)) stored at the current time point and the output data value (Q(k-1)) stored one point in time before, a second difference between the output data values (Q(k-1), Q(k-2)) stored one and two points in time before and a third difference value between the first and second difference values, the method being **characterized** in that said second step includes further calculating the sum of the output data value stored at the current time point and a difference value between the first and third difference values to thereby obtain the estimation value representing said state at one period after.

13. The method according to claim 12, further comprising a step of storing a coefficient proportional to the time constant of a step response of said measuring means; wherein
said second step includes multiplying said first difference value by the coefficient.

14. The method according to claim 12, further comprising:
a fourth step of detecting data values representing at least another state of the automobile; and
a fifth step of generating at least one function representing the state of the automobile on the basis of the detected data values of the detecting means; wherein
said second step includes multiplying said first difference value by the function.

## Patentansprüche

1. Elektrische Steuervorrichtung zum elektrischen Steuern einer steuerbaren Vorrichtung (5, 7, 14, 19), die an einem Kraftfahrzeug angebracht ist, mit:
einer Meßeinrichtung (8, 15, 91, 92, 30-34, 38) zum Messen von Datenwerten (Q(k)), die wenigstens einen Zustand des Kraftfahrzeuges darstellen;
einer Speichereinrichtung (24) zum Speichern von aufeinanderfolgenden Ausgangsdatenwerten, die periodisch von der Meßeinrichtung erhalten werden;
einer Berechnungseinrichtung (20, 60) zum Berechnen, zu einem gegenwärtigen Zeitpunkt, eines Schätzwertes (Q̅(k)), der den einen Zustand des Kraftfahrzeuges zu einem zukünftigen Zeitpunkt darstellt, auf der Basis eines Ausgangsdatenwertes der Meßeinrichtung zum gegenwärtigen Zeitpunkt und von vorher in der Speichereinrichtung gespeicherten Ausgangsdatenwerten; und mit
einer Betriebsverarbeitungseinrichtung (20) zum Berechnen wenigstens eines Steuerwertes, der an die steuerbare Vorrichtung anzulegen ist, auf der Basis des Schätzwertes von der Berechnungseinrichtung;
wobei die Berechnungseinrichtung (20) eine Einrichtung (30, 40, 50) zum Auslesen von in der Speichereinrichtung einen und zwei Zeitpunkte vorher gespeicherten Ausgangsdatenwerten (Q(k-1)), (Q(k-2)) und zum Berechnen des Schätzwertes (Q̅(k)) auf der Basis der ausgelesenen Ausgangsdatenwerte und des zum gegenwärtigen Zeitpunkt gespeicherten Ausgangsdatenwertes (Q(k)), und eine Einrichtung (30, 40) zum Berechnen eines ersten Differenzwertes zwischen dem zum gegenwärtigen Zeitpunkt gespeicherten Ausgangsdatenwert (Q(k)) und dem einen Zeitpunkt vorher gespeicherten Ausgangsdatenwert (Q(k-1)), einer zweiten Differenz zwischen den Ausgangsdatenwerten (Q(k-1), Q(k-2)), die einen und zwei Zeitpunkte vorher gespeichert wurden, und eines dritten Differenzwertes zwischen den ersten und zweiten Differenzwerten aufweist, und wobei die Vorrichtung dadurch **gekennzeichnet** ist, daß die Berechnungseinrichtung des weiteren eine Einrichtung (30, 40) zum Berechnen der Summe aus dem zum gegenwärtigen Zeitpunkt gespeicherten Ausgangsdatenwert und einem Differenzwert zwischen dem ersten und dritten Differenzwert aufweist, um dadurch den Schätzwert zu erhalten, der den genannten Zustand zu einem Zeitpunkt später anzeigt.

2. Vorrichtung nach Anspruch 1, wobei
die Speichereinrichtung (24) des weiteren eine Einrichtung zum Speichern eines Koeffizienten aufweist, der der Zeitkonstanten einer Sprungantwort der Meßeinrichtung proportional ist; und wobei
die Berechnungseinrichtung eine Einrichtung (70) zum Auslesen des Koeffizienten und zum Multiplizieren des ersten Differenzwertes mit dem Koeffizienten beinhaltet.

3. Vorrichtung nach Anspruch 2, wobei der Koeffizient (K_{T}) die Zeitkonstante geteilt durch eine Zeit ist, die gleich einer Periode ist.

4. Vorrichtung nach Anspruch 2, wobei die Meßeinrichtung wenigstens einen Sensor (8, 15, 91, 92) zum Messen von Datenwerten, die wenigstens einen Zustand des Kraftfahrzeuges darstellen, und einen Primär-Verzögerungsfilter (30-34) zum Filtern eines Ausgangssignales des Sensors zur Ausgabe der Ausgangsdatenwerte aufweist, und wobei die Zeitkonstante die Zeitkonstante (T_{L}) einer Sprungantwort des Primär-Verzögerungsfilters ist.

5. Vorrichtung nach Anspruch 2, wobei die Meßeinrichtung wenigstens einen Sensor (8, 15, 91, 92) zum Messen von Datenwerten, die wenigstens einen Zustand des Kraftfahrzeuges darstellen, und einen Primär-Verzögerungsfilter (30-34) zum Filtern eines Ausgangssignales des Sensors zur Ausgabe der Ausgangsdatenwerte aufweist, und wobei die Zeitkonstante die Zeitkonstante (T) einer Sprungantwort des Sensors und des Primär-Verzögerungsfilters ist.

6. Vorrichtung nach Anspruch 1, mit des weiteren:
einer Erfassungseinrichtung (4, 6, 8, 15-18, 91, 92) zum Erfassen von Datenwerten, die wenigstens einen weiteren Zustand des Kraftfahrzeuges darstellen; und mit
einem Funktionsgenerator (85) zum Erzeugen von wenigstens einer Funktion, die den Zustand des Kraftfahrzeuges darstellt, auf der Basis der erfaßten Datenwerte der Erfassungseinrichtung; wobei
die Berechnungseinrichtung (20) eine Einrichtung (80) zum Multiplizieren des ersten Differenzwertes mit der Funktion aufweist.

7. Vorrichtung nach Anspruch 6, wobei der Funktionsgenerator (85) eine Einrichtung zum Erzeugen erster und zweiter Funktionen, die den Zustand des Kraftfahrzeuges darstellen, auf der Basis der von der Erfassungseinrichtung erfaßten Datenwerte aufweist; und wobei
die Berechnungseinrichtung (20) eine Einrichtung (80) zum Erhalten des Produkts der zweiten Differenz mit der zweiten Funktion aufweist.

8. Vorrichtung nach Anspruch 6, wobei der wenigstens eine weitere Zustand des Kraftfahrzeuges ein Betriebszustand des Fahrzeugmotors ist.

9. Vorrichtung nach Anspruch 1, mit des weiteren
einem Filter (66) zum Filtern von Ausgangsdatenwerten der Meßeinrichtung (8, 15, 91, 92, 30-34, 38);
einer Beurteilungseinrichtung (64) zum Beurteilen, ob der Zustand des Kraftfahrzeuges entweder ein erster Zustand oder ein zweiter Zustand ist; und mit
einer Auswahleinrichtung (64) zum Auswählen des Ausgangs der genannten Einrichtung oder des Filters in Übereinstimmung mit dem Ergebnis der Beurteilungseinrichtung;
wobei die Betriebsverarbeitungseinrichtung (20) eine Einrichtung zum Berechnen des Steuerwertes auf der Basis des ausgewählten Ausgangssignales der Auswahleinrichtung aufweist.

10. Vorrichtung nach Anspruch 9, wobei die Beurteilungseinrichtung eine Einrichtung (90) aufweist, die zur Beurteilung als erstem oder zweitem Zustand feststellt, ob der Zustand des Kraftfahrzeuges ein Übergangszustand oder ein stationärer Zustand ist, und wobei die Auswahleinrichtung eine Einrichtung (64) zum Auswählen des Ausgangssignales der Berechnungseinrichtung, wenn die Beurteilungseinrichtung den Zustand als Übergangszustand beurteilt, und zum Auswählen des Ausgangssignales des Filters aufweist, wenn die Beurteilungseinrichtung den Zustand als stationären Zustand beurteilt.

11. Vorrichtung nach Anspruch 9, wobei die Beurteilungseinrichtung eine Einrichtung (62) zur Feststellung des ersten Zustands, wenn der Ausgangsdatenwert der Meßeinrichtung in einem Verhältnis ansteigt, das gleich oder größer als ein vorgegebenes Verhältnis ist, und zur Feststellung des zweiten Zustands aufweist, wenn der Ausgangsdatenwert in einem Verhältnis ansteigt, das kleiner ist als das vorgegebene Verhältnis, und wobei die Auswahleinrichtung (64) eine Einrichtung zum Auswählen des Ausgangssignales der Berechnungseinrichtung bzw. des Filters aufweist, wenn die Beurteilungseinrichtung den ersten oder den zweiten Zustand feststellt.

12. Verfahren zum Kompensieren einer Zeitverzögerung von gemessenen Daten in einer elektrischen Steuereinheit für ein Kraftfahrzeug, das eine Meßeinrichtung (8, 15, 91, 92, 30-34, 38) zum Messen von Datenwerten (Q(k)), die wenigstens einen Zustand des Kraftfahrzeuges darstellen, eine Speichereinrichtung (24) zum Speichern von aufeinanderfolgenden Ausgangsdatenwerten, die periodisch von der Meßeinrichtung erhalten werden, und eine Betriebsverarbeitungseinrichtung (20) zum Berechnen wenigstens eines Steuerwertes, der an die steuerbare Vorrichtung anzulegen ist, auf der Basis von Ausgangsdatenwerten der Meßeinrichtung aufweist, mit:
einem ersten Schritt des Auslesen von Ausgangsdatenwerten, die vorher in der Speichereinrichtung gespeichert wurden;
einem zweiten Schritt des Berechnens, zu einen gegenwärtigen Zeitpunkt, eines Schätzwertes (Q̅(k)), der den einen Zustand des Kraftfahrzeuges zu einem zukünftigen Zeitpunkt darstellt, auf der Basis eines Ausgangsdatenwertes der Meßeinrichtung zum gegenwärtigen Zeitpunkt und der aus der Speichereinrichtung ausgelesenen Ausgangsdatenwerte; und mit
einem dritten Schritt des Berechnens des Manipulationswertes auf der Basis des Schätzwertes in der Betriebsverarbeitungseinrichtung;
wobei der zweite Schritt das Auslesen von in der Speichereinrichtung einen und zwei Zeitpunkte vorher gespeicherten Ausgangsdatenwerten (Q(k-1)), (Q(k-2)) und das Berechnen des Schätzwertes auf der Basis der ausgelesenen Ausgangsdatenwerte und des zum gegenwärtigen Zeitpunkt gespeicherten Ausgangsdatenwertes (Q(k)) durch Berechnen eines ersten Differenzwertes zwischen dem zum gegenwärtigen Zeitpunkt gespeicherten Ausgangsdatenwert (Q(k)) und dem einen Zeitpunkt vorher gespeicherten Ausgangsdatenwert (Q(k-1)), einer zweiten Differenz zwischen den Ausgangsdatenwerten (Q(k-1), Q(k-2)), die einen und zwei Zeitpunkte vorher gespeichert wurden, und eines dritten Differenzwertes zwischen den ersten und zweiten Differenzwerten beinhaltet, und wobei das Verfahren dadurch **gekennzeichnet** ist, daß der zweite Schritt des weiteren das Berechnen der Summe aus dem zum gegenwärtigen Zeitpunktes gespeicherten Ausgangsdatenwert und einem Differenzwert zwischen dem ersten und dritten Differenzwert beinhaltet, um dadurch den Schätzwert zu erhalten, der den genannten Zustand eine Periode später anzeigt.

13. Verfahren nach Anspruch 12, mit einem weiteren Schritt des Speicherns eines Koeffizienten, der der Zeitkonstanten einer Sprungantwort der Meßeinrichtung proportional ist; wobei
der zweite Schritt das Multiplizieren des ersten Differenzwertes mit dem Koeffizienten beinhaltet.

14. Verfahren nach Anspruch 12, mit des weiteren
einem vierten Schritt des Erfassens von Datenwerten, die wenigstens einen weiteren Zustand des Kraftfahrzeuges darstellen; und mit
einem fünften Schritt des Erzeugens von wenigstens einer Funktion, die den Zustand des Kraftfahrzeuges darstellt, auf der Basis der erfaßten Datenwerte der Erfassungseinrichtung; wobei
der zweite Schritt das Multiplizieren des ersten Differenzwertes mit der Funktion beinhaltet.

## Revendications

1. Dispositif de commande électrique pour la commande électrique d'un dispositif commandable (5,7,14,19) installé dans une automobile, comprenant :
des moyens de mesure (8,15,91,92,30-34,38) pour mesurer des valeurs de données (Q(k)) représentant au moins un état de l'automobile;
des moyens de mémoire (24) pour mémoriser des valeurs de données de sortie successives reçues périodiquement desdits moyens de mesure;
des moyens de calcul (20,60) pour calculer, à un instant présent, une valeur d'estimation (Q̅(k)) représentant ledit état de ladite automobile à un instant futur sur la base d'une valeur de données de sortie desdits moyens de mesure à un instant présent et des valeurs de données de sortie mémorisées précédemment dans lesdits moyens de mémoire; et
des moyens d'exécution d'opérations (20) pour calculer au moins une valeur de commande devant être envoyée audit dispositif commandable sur la base de la valeur estimée délivrée par lesdits moyens de calcul;
dans lequel lesdits moyens de calcul (20) comprennent des moyens (30,40,50) pour lire des valeurs de données de sortie (Q(k-1), Q(k-2)) mémorisées dans lesdits moyens de mémoire un et deux instants auparavant et pour calculer la valeur d'estimation (Q̅(k)) sur la base des valeurs de données de sortie lues et de la valeur de données de sortie (Q(k)) mémorisée à l'instant présent, et des moyens (30,40) pour calculer une première valeur de différence entre la valeur de données de sortie (Q(k)) mémorisée à l'instant présent et la valeur de données de sortie (Q(k-1)) mémorisée un instant auparavant, une seconde différence entre les valeurs de données de sortie (Q(k-1), Q(k-2)) mémorisées un et deux instants auparavant et une troisième valeur de différence entre les première et seconde valeurs de différence, le dispositif étant caractérisé en ce que lesdits moyens de calcul comprennent en outre des moyens (30,40) pour calculer la somme de la valeur de données mémorisée à l'instant présent et d'une valeur de différence entre les première et troisième valeurs de différence pour obtenir ainsi la valeur d'estimation représentant ledit état à un instant suivant.

2. Dispositif selon la revendication 1, dans lequel lesdits moyens de mémoire (24) comprennent d'autres moyens pour mémoriser un coefficient proportionnel à la constante de temps d'une réponse échelon desdits moyens de mesure; et dans lequel
lesdits moyens de calcul comprennent des moyens (70) pour lire le coefficient et multiplier ladite première valeur de différence par ce coefficient.

3. Dispositif selon la revendication 2, dans lequel ledit coefficient (K_{T}) est la constante de temps divisée par une durée égale à une période.

4. Dispositif selon la revendication 2, dans lequel lesdits moyens de mesure comprennent au moins un capteur (8,15,91,92) pour mesurer des valeurs de données représentant au moins un état de l'automobile et un filtre de retardement primaire (30-34) pour filtrer un signal de sortie délivré par le capteur de manière à délivrer les valeurs de données de sortie, et dans lequel ladite constante de temps est une constante de temps (T_{L}) pour une réponse échelon du filtre de retardement primaire.

5. Dispositif selon la revendication 2, dans lequel lesdits moyens de mesure comprennent au moins un capteur (8,15,91,92) pour mesurer des valeurs de données représentant au moins un état de l'automobile et un filtre de retardement primaire (30-34) pour filtrer un signal de sortie fourni par le capteur de manière à délivrer les valeurs de données de sortie, et dans lequel ladite constante de temps est une constante de temps (T) pour une réponse échedon du capteur et du filtre de retardement primaire.

6. Dispositif selon la revendication 1 comportant en outre :
des moyens de détection (4,6,8,15-18,91,92) pour détecter des valeurs de données représentant au moins un autre état de l'automobile; et
des moyens générateurs de fonctions (85) pour produire au moins une fonction représentant l'état de l'automobile sur la base des valeurs de données détectées des moyens de détection; et dans lequel
lesdits moyens de calcul (20) comprennent des moyens (80) pour multiplier ladite première valeur de référence par la fonction.

7. Dispositif selon la revendication 6, dans lequel lesdits moyens générateurs de fonctions (85) comprennent des moyens pour produire des première et seconde fonctions représentant l'état de l'automobile sur la base des valeurs de données détectées des moyens de détection; et dans lequel
lesdits moyens de calcul (20) comprennent des moyens (80) pour former le produit de ladite seconde différence par la seconde fonction.

8. Dispositif selon la revendication 6, dans lequel au moins l'autre état de l'automobile est une condition de fonctionnement du moteur d'automobile.

9. Dispositif suivant la revendication 1, caractérisé en ce qu'il comporte en outre
des moyens formant filtre (66) pour filtrer des valeurs de données de sortie délivrées par lesdits moyens de mesure (8,15,91,92,30-34,38);
des moyens d'évaluation (62,90) pour évaluer si l'état de ladite automobile est un premier état ou un second état; et
des moyens de sélection (64) pour sélectionner l'un des signaux de sortie desdits moyens et desdits moyens formant filtre en fonction du résultat desdits moyens d'évaluation;
et dans lequel lesdits moyens d'exécution d'opérations (20) comprennent des moyens pour calculer la valeur de commande sur la base du signal de sortie sélectionné desdits moyens de sélection.

10. Dispositif selon la revendication 9, dans lequel lesdits moyens d'évaluation comprennent des moyens (90) pour évaluer, en tant que premier et second états, si l'état de ladite automobile est un état transitoire ou un état permanent, et lesdits moyens de sélection comprennent des moyens (64) pour sélectionner un signal de sortie desdits moyens de calcul lorsque lesdits moyens d'évaluation évaluent l'état comme étant un état transitoire, et sélectionner un signal de sortie desdits moyens formant filtre lorsque lesdits moyens d'évaluation évaluent l'état comme étant un état permanent.

11. Dispositif selon la revendication 9, dans lequel lesdits moyens d'évaluation comprennent des moyens (62) pour évaluer comme premier état le cas où la valeur de données de sortie desdits moyens de mesure augmente dans un rapport égal ou supérieur à un rapport prédéterminé, et comme second état le cas où la valeur de données de sortie augmente dans un rapport inférieur au rapport prédéterminé, et lesdits moyens de sélection (64) comprennent des moyens pour sélectionner les signaux de sortie desdits moyens de calcul et desdits moyens formant filtre, respectivement lorsque lesdits moyens d'évaluation évaluent les premier et second états.

12. Procédé de compensation d'un retard de données mesurées dans l'unité de commande électrique pour une automobile, qui comporte des moyens de mesure (8,15,91,92, 30-34,38) pour mesurer des valeurs de données (Q(k)) représentant au moins un état de l'automobile, des moyens de mémoire (24) pour mémoriser des valeurs de données de sortie successives reçues périodiquement desdits moyens de mesure et des moyens d'exécution d'opérations (20) pour le calcul d'au moins une valeur de commande devant être appliquée à un dispositif commandable sur la base de valeurs de données de sortie desdits moyens de mesure, comprenant :
une première étape de lecture des valeurs de données de sortie mémorisées auparavant dans lesdits moyens de mémoire;
une seconde étape de calcul, à un instant présent, d'une valeur d'estimation (Q̅(k)) représentant ledit état de ladite automobile à un instant futur sur la base d'une valeur de données desdits moyens de mesure à un instant présent et des valeurs de données de sortie lues dans lesdits moyens de mémoire; et
une troisième étape de calcul, dans lesdits moyens d'exécution d'opérations, de la valeur de manipulation sur la base de la valeur d'estimation; et
selon lequel ladite seconde étape comprend la lecture de valeurs de données de sortie (Q(k-1), Q(k-2)) mémorisées dans lesdits moyens de mémoire un et deux instants auparavant et le calcul de la valeur d'estimation sur la base des valeurs de sortie lues et de la valeur de données de sortie mémorisée à l'instant présent au moyen du calcul d'une première valeur de différence entre la valeur de données de sortie (Q(k)) mémorisée à l'instant présent et la valeur de données de sortie (Q(k-1)) mémorisée un instant auparavant, une seconde différence entre les valeurs de données de sortie (Q(k-1), Q(k-2)) mémorisées un et deux instants auparavant et une troisième valeur de différence entre les première et seconde valeurs de différence, le procédé étant caractérisé en ce que ladite seconde étape inclut en outre le calcul de la somme de la valeur de données de sortie mémorisée à l'instant présent et d'une valeur de différence entre les première et troisième valeurs de différence pour obtenir de ce fait la valeur d'estimation représentant ledit état une période plus tard.

13. Procédé selon la revendication 12, comprenant en outre une étape de mémorisation d'un coefficient proportionnel à la constante de temps d'une réponse échelon desdits moyens de mesure; et selon lequel
ladite seconde étape inclut la multiplication de ladite première valeur de différence par le coefficient.

14. Procédé selon la revendication 12, comportant en outre :
une quatrième étape de détection de valeurs de données représentant au moins un autre état de l'automobile; et
une cinquième étape de production d'au moins une fonction représentant l'état de l'automobile sur la base des valeurs de données détectées des moyens de détection; et selon lequel
ladite seconde étape incluant la multiplication de ladite première valeur de différence par la fonction.
